# EUROPÄISCHE PATENTSCHRIFT

(11) **EP 2 786 855 B1**
(45) Veröffentlichungstag und Bekanntmachung des Hinweises auf die Patenterteilung: **21.01.2015**
(21) Anmeldenummer: 13162273.0
(22) Anmeldetag: 04.04.2013
(51) Int. Cl.: B29C 51/26, B29C 51/38

(54) **Vorrichtung und Verfahren zum Herstellen von Kunststoffbehältern**
Device and method for manufacturing plastic containers
Dispositif et procédé de fabrication de récipients en plastique

(43) Veröffentlichungstag der Anmeldung: 08.10.2014
(73) Patentinhaber: Magna Steyr Fuel Systems GesmbH, 8261 Sinabelkirchen (AT)
(72) Erfinder: Drebes, Mario, 10249 Berlin (DE); Gross, Jörg, 50389 Wesseling (DE)
(74) Vertreter: Rausch, Gabriele

(56) Entgegenhaltungen:
- DE-B- 1 147 029
- FR-A- 412 649

## Beschreibung

### Gebiet der Erfindung

Die vorliegende Erfindung betrifft eine Vorrichtung zum Herstellen von Kunststoffbehältern, insbesondere von Kunststofftanks beispielsweise Kraftstofftanks von Kraftfahrzeugen. Weiters betrifft die vorliegende Erfindung ein Verfahren zum Herstellen von Kunststoffbehältern, insbesondere von Kunststofftanks.

### Stand der Technik

Für das Herstellen von Kunststoffbehältern, insbesondere Kunststofftanks, ist es bekannt das Verfahren Thermoformen und dem entsprechend Thermoformpressen einzusetzen. Es ist weiters das sogenannte Doppellage-Thermoformen oder Doppelform-Thermoformen bekannt, bei welchem in zwei Formen gleichzeitig Kunststoffhalbschalen thermogeformt werden, die anschließend im heißen und pastösen Zustand an ihren Rändern miteinander zu einem Hohlkörper verschweißt werden.

Ein Verfahren zum Doppellagen-Thermoformen von Kunststoff-Kraftstofftanks und eine Vorrichtung zum Herstellen von Kunststoff-Kraftstofftanks ist aus der WO 2004/062889 A1 bekannt, wobei zwei erhitzte Kunststoff-Lagen unabhängig voneinander zu einer ThermoformStation bewegt werden, wobei die einzelnen Kunststoff-Lagen in ein erstes und zweites formgebendes Gesenk abgesenkt werden, wobei das erste und zweite Gesenk seitlich nebeneinander angeordnet sind, wobei jede Kunststoff-Lage zu einer Schale thermogeformt wird und wobei eines der formgebenden Gesenke mit der thermogeformten Schale umgedreht wird und über dem anderen Gesenk angeordnet wird und schließlich überlappende Dichtungsgebiete der Schalen zusammengepresst und thermisch verschmolzen werden.

Aus der EP 1 314 528 A2 ist eine Thermoform-Presse zur Herstellung von geformten Teilen bekannt, umfassend einen Formauflagetisch der an einem Rahmen unterhalb einer Umformgesenkbaugruppe aufgehängt ist und ein Paar Formen, die Seite an Seite auf dem Formauflagetisch montiert sind, wobei Mittel zum Schwenken des genannten Formauflagetischs über einen bogenförmigen Pendelweg und zum abwechselnden Ausrichten und Registrieren der einen der genannten Formen und dann der anderen der genannten Formen mit der Umformgesenkbaugruppe vorgesehen sind.

Aus der FR 412649 ist eine Vorrichtung und ein Verfahren nach den Oberbegriffen der Ansprüche 1 und 10 bekannt.

### Zusammenfassung der Erfindung

Es ist eine Aufgabe der Erfindung, eine verbesserte Vorrichtung und ein verbessertes Verfahren zum Herstellen von Kunststoffbehältern anzugeben, wodurch insbesondere der Durchsatz erhöht werden kann, und gleichzeitig eine kompakte Konstruktion der Vorrichtung ermöglicht ist.

Die Lösung der Aufgabe erfolgt durch eine Vorrichtung zum Herstellen von Kunststoffbehältern, wobei die Vorrichtung einen ersten Presstisch mit einer ersten Formhälfte umfasst und einen Schwenkarm mit einer zweiten Formhälfte, wobei in der ersten und der zweiten Formhälfte erhitzte und thermogeformte Kunststoffhalbschalen aufnehmbar sind, wobei bei einer ersten Position des Schwenkarms über dem ersten Presstisch die erste und die zweite Formhälfte zueinander hin offen sind, so dass durch Pressen der ersten Formhälfte auf die zweite Formhälfte die darin aufgenommenen Kunststoffhalbschalen an ihren überlappenden Rändern miteinander verschweißbar sind, wobei die Vorrichtung einen zweiten Presstisch mit einer dritten Formhälfte umfasst und der Schwenkarm eine vierte Formhälfte aufweist, wobei in der dritten und der vierten Formhälfte erhitzte und thermogeformte Kunststoffhalbschalen aufnehmbar sind, wobei bei einer zweiten Position des Schwenkarms über dem zweiten Presstisch die dritte und die vierte Formhälfte zueinander hin offen sind, so dass durch Pressen der dritten Formhälfte auf die vierte Formhälfte die darin aufgenommenen Kunststoffhalbschalen an ihren überlappenden Rändern miteinander verschweißbar sind.

Die Lösung der Aufgabe erfolgt auch durch ein Verfahren zum Herstellen von Kunststoffbehältern, wobei erhitzte Kunststoffplatten in einer ersten nach oben offenen Formhälfte und einer zweiten nach oben offenen Formhälfte eingebracht werden und in der ersten und zweiten Formhälfte die Kunststoffplatten zu Kunststoffhalbschalen thermogeformt werden, wobei die erste Formhälfte an einem ersten Presstisch angeordnet ist und die zweite Formhälfte an einem Schwenkarm angeordnet ist, wobei, insbesondere nach dem Thermoformen, der Schwenkarm in eine erste Position über dem ersten Presstisch gebracht wird in welcher die erste und die zweite Formhälfte zueinander hin offen sind, wobei danach durch Pressen der ersten Formhälfte auf die zweite Formhälfte die darin aufgenommenen Kunststoffhalbschalen an ihren überlappenden Rändern miteinander verschweißt werden, wobei danach erhitzte Kunststoffplatten in einer dritten nach oben offenen Formhälfte und einer vierten nach oben offenen Formhälfte eingebracht werden und in der dritten und vierten Formhälfte die Kunststoffplatten zu dritten und vierten Kunststoffhalbschalen thermogeformt werden, wobei die dritte Formhälfte an einem zweiten Presstisch angeordnet ist und die vierte Formhälfte am Schwenkarm angeordnet ist, wobei, insbesondere nach dem Thermoformen, der Schwenkarm in eine zweite Position über dem zweiten Presstisch gebracht wird in welcher die dritte und die vierte Formhälfte zueinander hin offen sind, wobei danach durch Pressen der dritten Formhälfte auf die vierte Formhälfte die darin aufgenommenen Kunststoffhalbschalen an ihren überlappenden Rändern miteinander verschweißt werden.

Erfindungsgemäß ist vorgesehen zwei Presstische zu verwenden, an welchem jeweils eine Formhälfte angeordnet ist. Die beiden zugehörigen Formhälften die die Formhälften an den Presstischen ergänzen sind an einem gemeinsamen Schwenkarm angeordnet. Auf diese Weise kann durch eine einzige Schwenkbewegung des Schwenkarms ein Formpaar, beispielsweise die erste und zweite Formhälfte, einander angenähert und in eine Position zum Verschweißen gebracht werden und gleichzeitig ein zweites Formpaar, beispielsweise die dritte und vierte Formhälfte, zur Entnahme des verschweißten Behälters geöffnet werden. Auch können somit während ein Formpaar geschlossen ist und der verschweißte Behälter darin abkühlt bereits gleichzeitig in die Formhälften des anderen Formpaares erhitzte Kunststoffplatten eingebracht und zu Kunststoffhalbschalen thermogeformt werden.

Weiterbildungen der Erfindung sind in den abhängigen Ansprüchen, der Beschreibung sowie den beigefügten Zeichnungen angegeben.

Bevorzugt ist die erste Formhälfte und/oder die zweite Formhälfte und/oder die dritte Formhälfte und/oder die vierte Formhälfte als Thermoformstation ausgebildet, so dass in die jeweilige Formhälfte eine erhitzte Kunststoffplatte einbringbar ist und aus der Kunststoffplatte die Kunststoffhalbschale in der jeweiligen Formhälfte thermogeformt wird.

Besonders bevorzugt sind die Thermoformstationen als Vakuumthermoformstationen ausgebildet, so dass die Kunststoffplatten durch ein Vakuum in die jeweiligen Formhälften gezogen werden.

Vorzugsweise sind die zweite Formhälfte und die vierte Formhälfte an gegenüberliegenden Seiten des Schwenkarms angeordnet, so dass die Öffnungen der Formhälften jeweils vom Schwenkarm weg weisen.

Der Schwenkarm ist dann bevorzugt etwa in der Mitte zwischen dem ersten Presstisch und dem zweite Presstisch gelagert und wird zwischen der ersten Position und der zweiten Position um etwa 180 Grad vertikal geschwenkt.

Der Schwenkarm umfasst bevorzugt einen, beispielsweise vertikalen, unbeweglichen Schwenkarmständer und einen am Schwenkarmständer gelagerten schwenkbaren Schwenktisch, der die zweite und vierte Formhälfte trägt. Im Rahmen dieser Patentschrift ist mit einer Schwenkbewegung des Schwenkarmes dann eine Schwenkbewegung des schwenkbaren Schwenktisches des Schwenkarmes gemeint.

Bevorzugt ist der Schwenkarm durch einen Getriebemotor zwischen der ersten Position und der zweiten Position schwenkbar oder durch einen Hydraulikmotor.

Gemäß einer vorteilhaften Ausführungsform wird die Schwenkbewegung des Schwenkarms durch eine Vorrichtung unterstützt, die das Gewicht des Schwenkarms für das Heben des Schwenkarms ausnützt. Das kann insbesondere eine Federvorrichtung bzw. eine hydraulische Vorrichtung sein, die durch das Senken des Schwenkarmes in Heberichtung vorgespannt wird.

Die Presse des ersten und/oder des zweiten Presstisches wird bevorzugt mechanisch, hydraulisch und/oder hydropneumatisch betrieben. Insbesondere kann eine oder bevorzugt beide Pressen zumindest zweistufig betrieben werden, beispielsweise in einer Schnelllaufphase mit höherer Schließgeschwindigkeit und geringerer Schließkraft und einer Kraftphase mit höherer Schließkraft. Dabei kann beispielsweise die Schnelllaufphase mechanisch und die Kraftphase hydraulisch angetrieben sein.

In einem erfindungsgemäßen Verfahren zum Herstellen von Kunststoffbehältern können die Kunststoffplatten in der ersten Formhälfte und/oder der zweiten Formhälfte und/oder der dritten Formhälfte und/oder der vierten Formhälfte zum Thermoformen durch ein Vakuum in die jeweiligen Formhälften gezogen werden.

Kunststoffplatten können in die erste und zweite Formhälfte eingebracht werden und bevorzugt auch thermogeformt werden während miteinander verschweißte Kunststoffhalbschalen in der dritten und vierten Formhälfte abkühlen. Kunststoffplatten können auch in die dritte und vierte Formhälfte eingebracht werden und bevorzugt auch thermogeformt werden während miteinander verschweißte Kunststoffhalbschalen in der ersten und zweiten Formhälfte abkühlen. Bevorzugt wird so abwechselnd der Kunststoff in einem Formpaar vorbereitet und thermogeformt während ein Behälter im anderen Formpaar abkühlt.

Vorzugsweise können Einlegeteile nach dem Thermoformen der Kunststoffhalbschalen und vor dem paarweisen Verschweißen der Kunststoffhalbschalen in die erste und/oder zweite und/oder dritte und/oder vierte Formhälfte eingebracht werden. Einlegeteile können beispielsweise auch vor dem Thermoformen in die Kunststoffhalbschalen eingebracht werden.

Besonders bevorzugt wird der Schwenkarm bzw. der schwenkbare Schwenktisch des Schwenkarms, der die zweite und vierte Formhälfte trägt, vor dem Pressen in seiner Position verriegelt, beispielsweise mechanisch, zum Beispiel durch einen Bolzen welcher in eine Bohrung treibbar ist, durch eine Klinke oder Drehfalle, oder auch elektrisch, hydraulisch oder pneumatisch, so dass der verriegelte Schwenkarm den Kräften beim Pressen standhalten kann.

### Kurzbeschreibung der Zeichnungen

Die Erfindung wird im Folgenden beispielhaft unter Bezugnahme auf die Zeichnungen beschrieben.
- Fig. 1: ist eine dreidimensionale Darstellung einer erfindungsgemäßen Vorrichtung zum Herstellen von Kunststoffbehältern.
- Fig. 2: ist eine schematische Darstellung einer erfindungsgemäßen Vorrichtung zum Herstellen von Kunststoffbehältern.
- Fig. 3 - Fig. 8: zeigen ein erfindungsgemäßes Verfahren zum Herstellen von Kunststoffbehältern.
- Fig. 9: ist eine Vorderansicht einer weiteren erfindungsgemäßen Vorrichtung zum Herstellen von Kunststoffbehältern.
- Fig. 10: ist eine Rückansicht der Vorrichtung gemäß Fig. 9.
- Fig. 11: ist eine schematische Darstellung der Federunterstützung einer erfindungsgemäßen Vorrichtung.

### Detaillierte Beschreibung der Erfindung

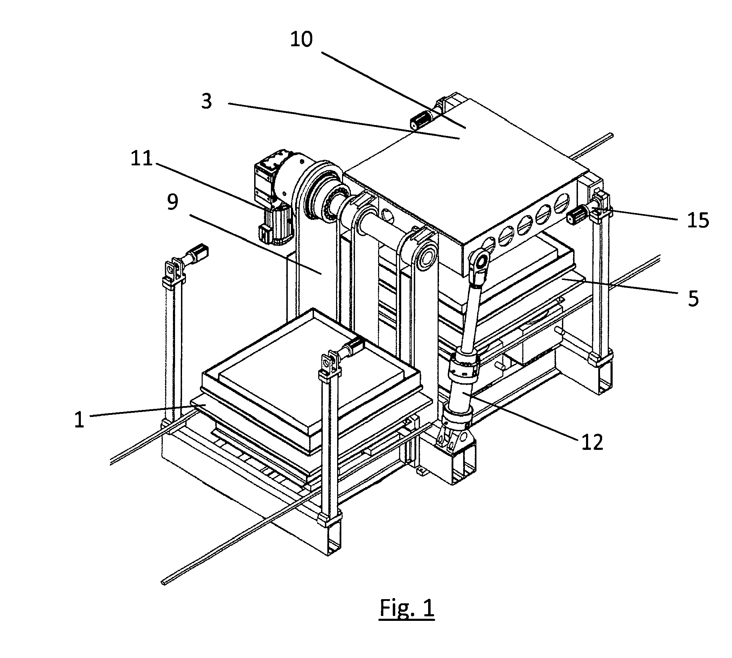

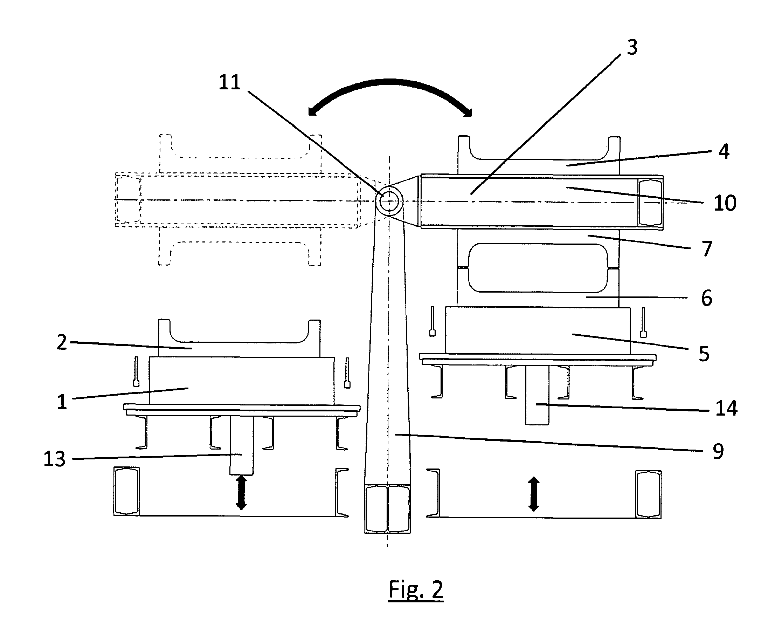

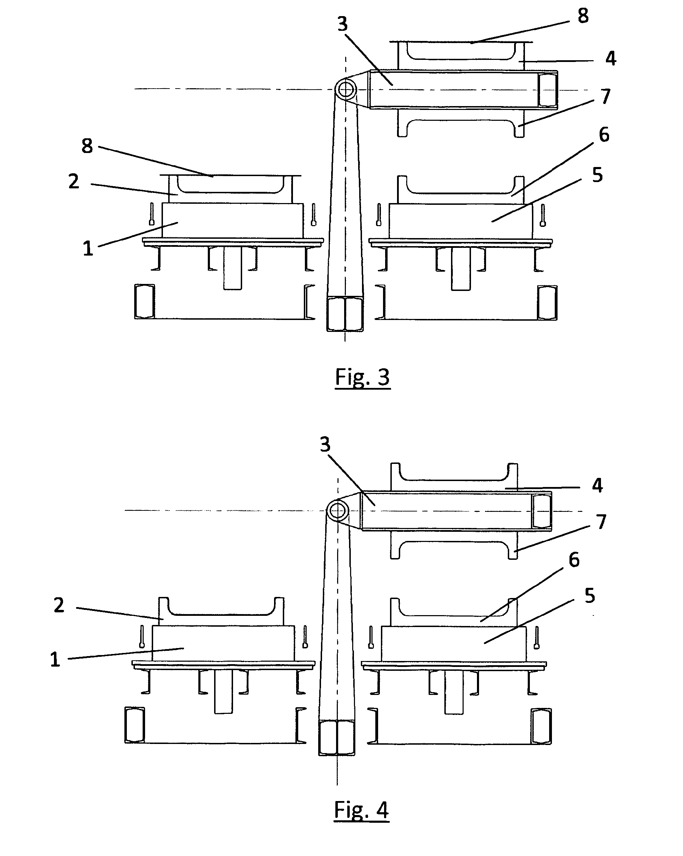

In den Fig. 1 und 2 ist eine erfindungsgemäße Vorrichtung zum Herstellen von Kunststoffbehältern dargestellt, wobei die Vorrichtung einen ersten Presstisch 1 und einen zweiten Presstisch 5 umfasst und einen Schwenkarm 3 zwischen den beiden Presstischen 1, 5. Der Schwenkarm 3 besteht aus einem Schwenkarmständer 9 und einem Schwenktisch 10, der auf dem Schwenkarmständer 9 schwenkbar gelagert ist. Der erste und der zweite Presstisch 1, 5 gehören zu einer Presse 13 bzw. 14. Auf dem ersten Presstisch 1 ist eine erste Formhälfte 2 angeordnet (in Fig. 1 sind die Formhälften nicht dargestellt), die zusammen mit einer zweiten Formhälfte 4, welche am Schwenkarm 3 auf derjenigen Seite des Schwenktisches 10 angeordnet ist, die dem ersten Presstisch 1 zugewandt ist, ein zusammenwirkendes Formpaar bildet. In der ersten und der zweiten Formhälfte 2, 4 können erhitzte und thermogeformte Kunststoffhalbschalen aufgenommen werden. Dazu werden, wie im Verfahren gemäß der Figuren 3-8 dargestellt, annähernd eben gehaltene Kunststoffplatten 8 auf die Formhälften 2 und 4 aufgelegt und in den Formhälften 2, 4 thermogeformt. Die Vorrichtung weist darüber hinaus auf dem zweiten Presstisch 5 eine dritte Formhälfte 6 auf und der Schwenkarm 3 weist eine vierte Formhälfte 7 auf, wobei auch in der dritten und der vierten Formhälfte 6, 7 erhitzte und thermogeformte Kunststoffhalbschalen aufnehmbar sind. In Fig. 1 und Fig. 2 ist der Schwenkarm 3 jeweils in einer zweiten Position des Schwenkarms 3 dargestellt, in welcher die dritte und die vierte Formhälfte 6, 7 zueinander hin offen sind, so dass durch Pressen der dritten Formhälfte 6 auf die vierte Formhälfte 7 die darin aufgenommenen erhitzen, pastösen Kunststoffhalbschalen an ihren überlappenden Rändern miteinander verschweißt werden können um einen geschlossenen Kunststoffbehälter 20 zu bilden.

Wie in Fig. 1 dargestellt, wird der Schwenkarm 3, bzw. dessen Schwenktisch 10, primär über einen Getriebemotor 11 aktuiert. Die Schwenkbewegung des Schwenkarms 3 wird dabei von einer hydropneumatischen Federvorrichtung 12 unterstützt, so dass der Getriebemotor 11 geringer dimensioniert werden kann. Der Schwenktisch 10 kann mittels Verriegelungen 15 in einer horizontalen Position festgelegt werden, damit dieser den Kräften beim Pressen der Formhälften aufeinander standhällt.

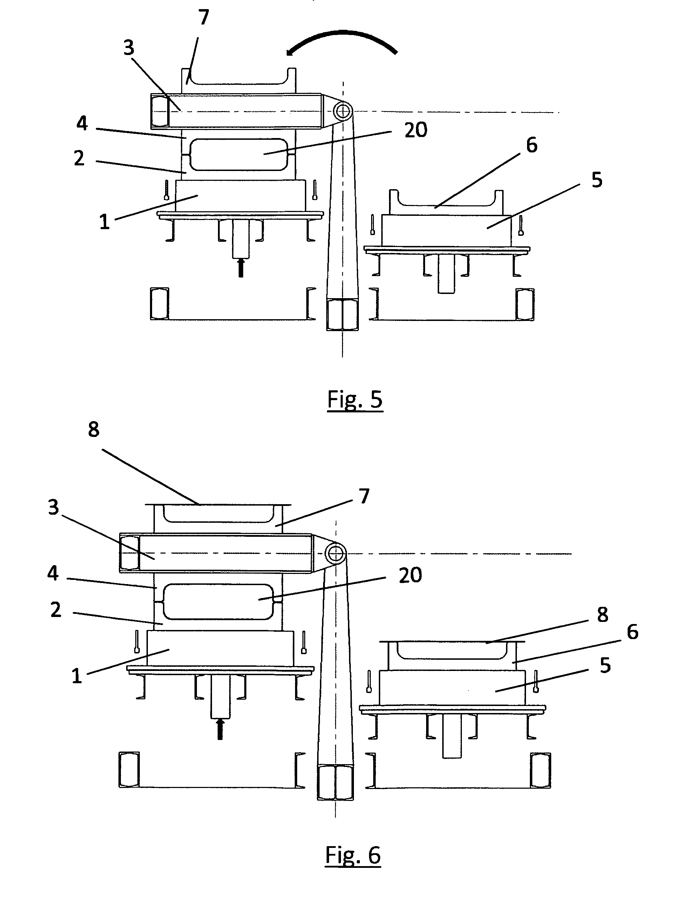

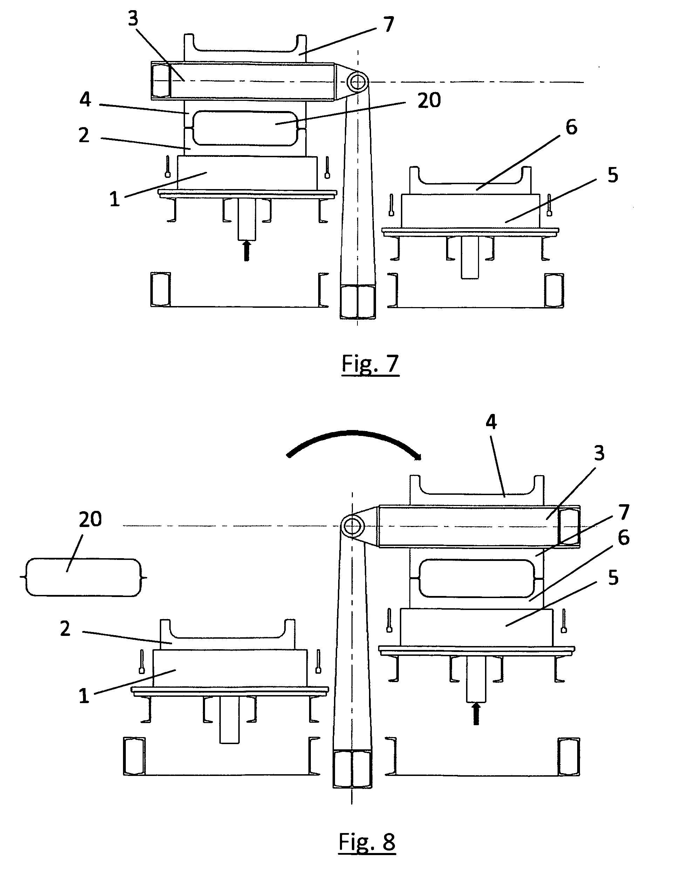

Fig. 3 bis Fig. 8 zeigen ein erfindungsgemäßes Verfahren zum Herstellen von Kunststoffbehältern in verschiedenen Verfahrensschritten. Zunächst befindet sich, in Fig. 3, der Schwenkarm 3 der Vorrichtung noch in der zweiten Position, in welcher sich die Öffnungen der dritten und vierten Formhälfte 6, 7 gegenüberstehen. Die Öffnungen der ersten Formhälfte 2 und der zweiten Formhälfte 4 weisen nach oben, so dass vorgewärmte Kunststoffplatten 8 aufgelegt werden können und an deren Rändern mit geeigneten Dichtrahmen zu den Formhälften abgedichtet werden können. Daraufhin werden, in Fig. 4, die Kunststoffplatten 8 in den Formhälften 2 und 4 durch ein Vakuum thermogeformt, so dass sie in die Formhälften 2 und 4 gezogen werden. Daraufhin können Einlegeteile in die geformten Kunststoffschalen eingebracht und an diesen befestigt, insbesondere verschweißt werden. Im nächsten Schritt, dargestellt in Fig. 5, wird der Schwenkarm 3 um 180 Grad in den Figuren nach links geschwenkt, so dass der Schwenkarm 3 die erste Position einnimmt, in welcher die Öffnungen der ersten und zweiten Formhälfte 2, 4 einander gegenüber liegen. Der erste Presstisch 1 fährt hoch und presst die beiden Kunststoffschalen zusammen, die so durch Druck und Hitze an ihren Rändern miteinander verschweißt werden um einen Kunststoffbehälter 20 zu bilden. Wie in Fig. 6 dargestellt, können daraufhin auf die nun nach oben offenen formhälften 6 und 7 wiederum vorgewärmte Kunststoffplatten 8 aufgelegt werden und am Rand mit geeigneten Dichtrahmen zu den Formhälften abgedichtet werden, während der Kunststoffbehälter 20 in der ersten und zweiten Formhälfte 2, 4 abkühlt. Die Kunststoffplatten 8 auf den dritten und vierten Formhälften 6, 7 werden nun, siehe Fig. 7, vakuumgeformt und wieder Einlegeteile in die Kunststoffschalen eingebracht und auf diesen verschweißt. Währenddessen kühlt der Kunststoffbehälter 20 in der ersten und zweiten Formhälfte 2, 4 weiter ab. Wie in Fig. 8 dargestellt, kann daraufhin der erste Presstisch 1 wieder gesenkt werden und der fertige Kunststoffbehälter 20 entnommen werden, während der Schwenkarm 3 wieder zurück zum zweiten Presstisch 5 geschwenkt wird und ein weiterer Behälter auf dieser zweiten Presse gepresst wird. Der dargestellte Prozess kann sich nun natürlich beliebig oft wiederholen. Bei jedem Schwenken des Schwenkarmes 3 wird ein weiterer fertiger Kunststoffbehälter 20 freigegeben. Die mit der ersten Presse 13 hergestellten Kunststoffbehälter 20 können mit den an der zweiten Presse 14 hergestellten Kunststoffbehältern 20 identisch sein, und somit mit höherem Durchsatz produziert werden. Es können jedoch auch verschiedene Formhälften an den Presstischen verwendet werden, so dass gleichzeitig zwei unterschiedliche Produkte hergestellt werden können.

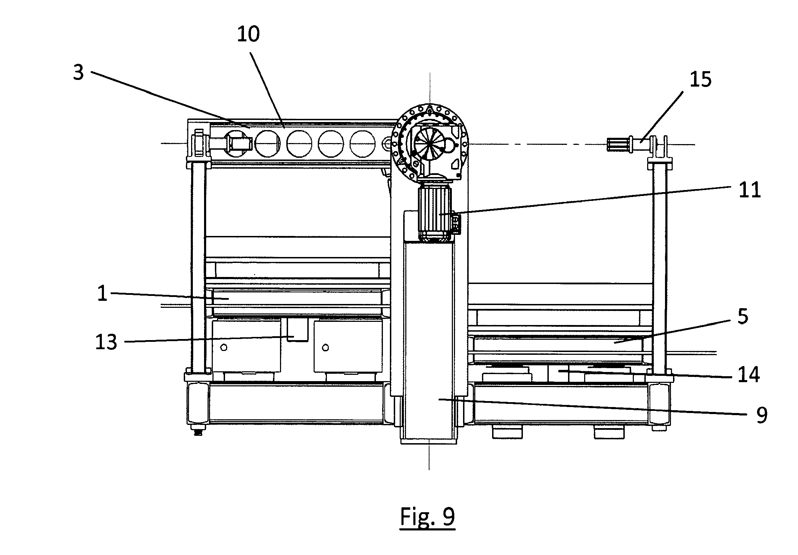

Fig. 9 ist eine Vorderansicht einer erfindungsgemäßen Vorrichtung zum Herstellen von Kunststoffbehältern, beispielsweise von der Seite der Behälterentnahme her.

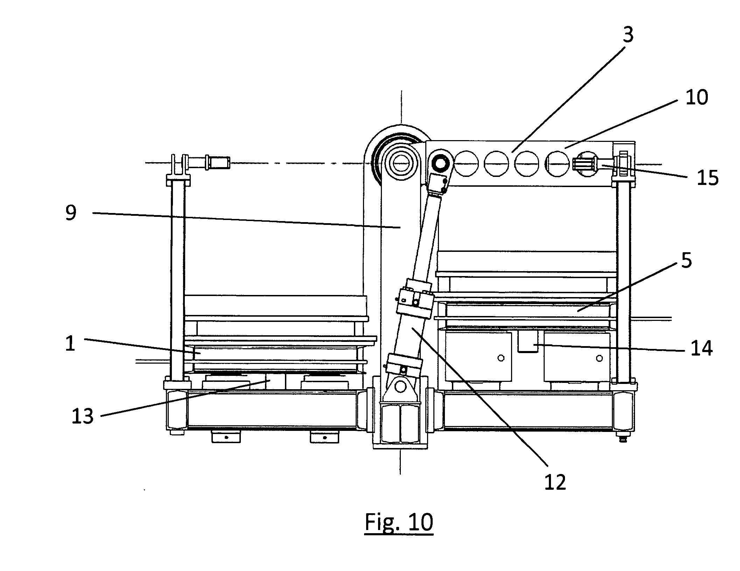

Fig. 10 ist eine Rückansicht der Vorrichtung gemäß Fig. 9, beispielsweise von der Seite der Zuführung der Kunststoffplatten her.

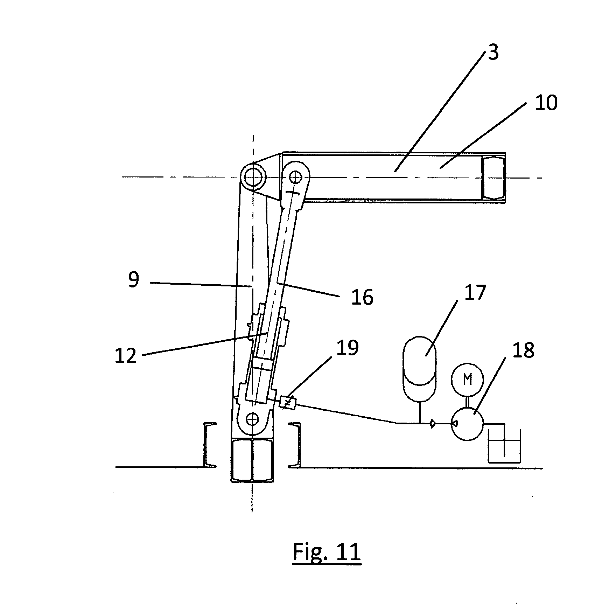

Fig. 11 ist eine schematische Darstellung einer Federunterstützung einer erfindungsgemäßen Vorrichtung. Die Unterstützung der Schwenkbewegung des Schwenkarmes 3 erfolgt durch eine hydropneumatische Federvorrichtung 12, die einen Hydraulikzylinder 16 verwendet, durch welchen der Schwenktisch 10 bewegbar ist. Ein Hydraulikfluid ist dazu in einem Druckspeicher 17 gespeichert. Durch eine Abwärtsbewegung des Schwenktisches 10 wird über den Hydraulikzylinder 16 das Hydraulikfluid in den Druckspeicher 17 gepresst und baut somit einen Druck auf, der für ein anschließendes Heben des Schwenktisches 10 genutzt werden kann. Der Druck des Hydraulikfluids kann auch aktiv gesteuert werden, beispielsweise über eine Hydraulikpumpe 18. Um Resonanzschwingungen des Schwenkarms 3 zu verhindern, kann eine Dämpfung 19 der Federvorrichtung 12 vorgesehen sein.

Die Erfindung gibt somit eine verbesserte Vorrichtung und ein verbessertes Verfahren zum Herstellen von Kunststoffbehältern an, wodurch insbesondere der Durchsatz erhöht werden kann, und gleichzeitig eine kompakte Konstruktion der Vorrichtung ermöglicht ist.

### Bezugszeichenliste

- 1: erster Presstisch
- 2: erste Formhälfte
- 3: Schwenkarm
- 4: zweite Formhälfte
- 5: zweiter Presstisch
- 6: dritte Formhälfte
- 7: vierte Formhälfte
- 8: Kunststoffplatte
- 9: Schwenkarmständer
- 10: Schwenktisch
- 11: Getriebemotor
- 12: Federvorrichtung
- 13: Presse
- 14: Presse
- 15: Verriegelung
- 16: Hydraulikzylinder
- 17: Druckspeicher
- 18: Pumpe
- 19: Dämpfung
- 20: Kunststoffbehälter

## Patentansprüche

1. Vorrichtung zum Herstellen von Kunststoffbehältern, wobei die Vorrichtung einen ersten Presstisch (1) mit einer ersten Formhälfte (2) umfasst und einen Schwenkarm (3) mit einer zweiten Formhälfte (4), wobei in der ersten und der zweiten Formhälfte (2, 4) erhitzte und thermogeformte Kunststoffhalbschalen aufnehmbar sind, wobei bei einer ersten Position des Schwenkarms (3) über dem ersten Presstisch (1) die erste und die zweite Formhälfte (2, 4) zueinander hin offen sind, so dass durch Pressen der ersten Formhälfte (2) auf die zweite Formhälfte (4) die darin aufgenommenen Kunststoffhalbschalen an ihren überlappenden Rändern miteinander verschweißbar sind,
**dadurch gekennzeichnet, dass** die Vorrichtung einen zweiten Presstisch (5) mit einer dritten Formhälfte (6) umfasst und der Schwenkarm (3) eine vierte Formhälfte (7) aufweist, wobei in der dritten und der vierten Formhälfte (6, 7) erhitzte und thermogeformte Kunststoffhalbschalen aufnehmbar sind, wobei bei einer zweiten Position des Schwenkarms (3) über dem zweiten Presstisch (5) die dritte und die vierte Formhälfte (6, 7) zueinander hin offen sind, so dass durch Pressen der dritten Formhälfte (6) auf die vierte Formhälfte (7) die darin aufgenommenen Kunststoffhalbschalen an ihren überlappenden Rändern miteinander verschweißbar sind.

2. Vorrichtung nach Anspruch 1,
**dadurch gekennzeichnet, dass** die erste Formhälfte (2) und/oder die zweite Formhälfte (4) und/oder die dritte Formhälfte (6) und/oder die vierte Formhälfte (7) als Thermoformstation ausgebildet ist, so dass in die jeweilige Formhälfte (2, 4, 6, 7) eine erhitzte Kunststoffplatte (8) einbringbar ist und aus der Kunststoffplatte (8) die Kunststoffhalbschale in der jeweiligen Formhälfte (2, 4, 6, 7) thermogeformt wird.

3. Vorrichtung nach Anspruch 2,
**dadurch gekennzeichnet, dass** die Thermoformstationen als Vakuumthermoformstationen ausgebildet sind, so dass die Kunststoffplatten (8) durch ein Vakuum in die jeweiligen Formhälften (2, 4, 6, 7) gezogen werden.

4. Vorrichtung nach zumindest einem der vorhergehenden Ansprüche,
**dadurch gekennzeichnet, dass** die zweite Formhälfte (4) und die vierte Formhälfte (7) an gegenüberliegenden Seiten des Schwenkarms (3) angeordnet sind, so dass die Öffnungen der Formhälften (4, 7) jeweils vom Schwenkarm (3) weg weisen.

5. Vorrichtung nach zumindest einem der vorhergehenden Ansprüche,
**dadurch gekennzeichnet, dass** der Schwenkarm (3) etwa in der Mitte zwischen dem ersten Presstisch (1) und dem zweite Presstisch (5) gelagert ist und der Schwenkarm (3) zwischen der ersten Position und der zweiten Position um etwa 180 Grad vertikal schwenkbar ist.

6. Vorrichtung nach zumindest einem der vorhergehenden Ansprüche,
**dadurch gekennzeichnet, dass** der Schwenkarm (3) einen Schwenkarmständer (9) umfasst und einen schwenkbaren Schwenktisch (10), der die zweite und vierte Formhälfte (4, 7) trägt.

7. Vorrichtung nach zumindest einem der vorhergehenden Ansprüche,
**dadurch gekennzeichnet, dass** der Schwenkarm (3) durch einen Getriebemotor (11) zwischen der ersten Position und der zweiten Position schwenkbar ist.

8. Vorrichtung nach zumindest einem der vorhergehenden Ansprüche,
**dadurch gekennzeichnet, dass** die Schwenkbewegung des Schwenkarms (3) durch eine Vorrichtung unterstützt wird, die das Gewicht des Schwenkarms (3) für das Heben des Schwenkarms (3) ausnützt, insbesondere eine Federvorrichtung (12).

9. Vorrichtung nach zumindest einem der vorhergehenden Ansprüche,
**dadurch gekennzeichnet, dass** die Presse (13, 14) des ersten und/oder des zweiten Presstisches (1, 5) mechanisch, hydraulisch und/oder hydropneumatisch betrieben ist, insbesondere zweistufig betrieben.

10. Verfahren zum Herstellen von Kunststoffbehältern, wobei erhitzte Kunststoffplatten (8) in einer ersten nach oben offenen Formhälfte (2) und einer zweiten nach oben offenen Formhälfte (4) eingebracht werden und in der ersten und zweiten Formhälfte (2, 4) die Kunststoffplatten (8) zu Kunststoffhalbschalen thermogeformt werden, wobei die erste Formhälfte (2) an einem ersten Presstisch (1) angeordnet ist und die zweite Formhälfte (4) an einem Schwenkarm (3) angeordnet ist, wobei der Schwenkarm (3) in eine erste Position über dem ersten Presstisch (1) gebracht wird in welcher die erste und die zweite Formhälfte (2, 4) zueinander hin offen sind, wobei danach durch Pressen der ersten Formhälfte (2) auf die zweite Formhälfte (4) die darin aufgenommenen Kunststoffhalbschalen an ihren überlappenden Rändern miteinander verschweißt werden,
**dadurch gekennzeichnet, dass** danach erhitzte Kunststoffplatten (8) in einer dritten nach oben offenen Formhälfte (6) und einer vierten nach oben offenen Formhälfte (7) eingebracht werden und in der dritten und vierten Formhälfte (6, 7) die Kunststoffplatten (8) zu dritten und vierten Kunststoffhalbschalen thermogeformt werden, wobei die dritte Formhälfte (6) an einem zweiten Presstisch (5) angeordnet ist und die vierte Formhälfte (7) am Schwenkarm (3) angeordnet ist, wobei der Schwenkarm (3) in eine zweite Position über dem zweiten Presstisch (5) gebracht wird in welcher die dritte und die vierte Formhälfte (6, 7) zueinander hin offen sind, wobei danach durch Pressen der dritten Formhälfte (6) auf die vierte Formhälfte (7) die darin aufgenommenen Kunststoffhalbschalen an ihren überlappenden Rändern miteinander verschweißt werden.

11. Verfahren nach Anspruch 10,
**dadurch gekennzeichnet, dass** die Kunststoffplatten (8) in der ersten Formhälfte (2) und/oder der zweiten Formhälfte (4) und/oder der dritten Formhälfte (6) und/oder der vierten Formhälfte (7) zum Thermoformen durch ein Vakuum in die jeweiligen Formhälften (2, 4, 6, 7) gezogen werden.

12. Verfahren nach Anspruch 10 oder 11,
**dadurch gekennzeichnet, dass** der Schwenkarm (3) zwischen der ersten Position und der zweiten Position um etwa 180 Grad vertikal geschwenkt wird.

13. Verfahren nach zumindest einem der Ansprüche 10 bis 12,
**dadurch gekennzeichnet, dass** Kunststoffplatten (8) in die erste und zweite Formhälfte (2, 4) eingebracht werden während miteinander verschweißte Kunststoffhalbschalen in der dritten und vierten Formhälfte (6, 7) abkühlen und/oder dass Kunststoffplatten (8) in die dritte und vierte Formhälfte (6, 7) eingebracht werden während miteinander verschweißte Kunststoffhalbschalen in der ersten und zweiten Formhälfte (2, 4) abkühlen.

14. Verfahren nach zumindest einem der Ansprüche 10 bis 13,
**dadurch gekennzeichnet, dass** Einlegeteile nach dem Thermoformen der Kunststoffhalbschalen und vor dem paarweisen Verschweißen der Kunststoffhalbschalen in die erste und/oder zweite und/oder dritte und/oder vierte Formhälfte (2, 4, 6, 7) eingebracht werden.

15. Verfahren nach zumindest einem der Ansprüche 10 bis 14,
**dadurch gekennzeichnet, dass** der Schwenkarm (3) oder ein schwenkbarer Schwenktisch (10) des Schwenkarms (3), der die zweite und vierte Formhälfte (4, 7) trägt, vor dem Pressen in seiner Position verriegelt wird.

## Claims

1. Device for manufacturing plastic containers, the device comprising a first press platen (1) with a first mould half (2) and a pivoting arm (3) with a second mould half (4), heated and thermoformed plastic half-shells being accommodatable in the first and the second mould half (2, 4), and, in a first position of the pivoting arm (3) above the first press platen (1), the first and the second mould half (2, 4) being opened towards one another, so that, by the first mould half (2) being pressed onto the second mould half (4), the plastic half-shells accommodated therein can be welded to one another at their overlapping margins, **characterized in that** the device comprises a second press platen (5) with a third mould half (6) and the pivoting arm (3) has a fourth mould half (7), heated and thermoformed plastic half-shells being accommodatable in the third and the fourth mould half (6, 7), and, in a second position of the pivoting arm (3) above the second press platen (5), the third and the fourth mould half (6, 7) being opened towards one another, so that, by the third mould half (6) being pressed onto the fourth mould half (7), the plastic half-shells accommodated therein can be welded to one another at their overlapping margins.

2. Device according to Claim 1, **characterized in that** the first mould half (2) and/or the second mould half (4) and/or the third mould half (6) and/or the fourth mould half (7) are/is designed as a thermoforming station, so that a heated plastic plate (8) can be introduced into the respective mould half (2, 4, 6, 7) and the plastic half-shell is thermoformed out of the plastic plate (8) in the respective mould half (2, 4, 6, 7).

3. Device according to Claim 2, **characterized in that** the thermoforming stations are designed as vacuum thermoforming stations, so that the plastic plates (8) are drawn into the respective mould halves (2, 4, 6, 7) by a vacuum.

4. Device according to at least one of the preceding claims, **characterized in that** the second mould half (4) and the fourth mould half (7) are arranged on opposite sides of the pivoting arm (3), so that the orifices of the mould halves (4, 7) in each case point away from the pivoting arm (3).

5. Device according to at least one of the preceding claims, **characterized in that** the pivoting arm (3) is mounted approximately in the middle between the first press platen (1) and the second press platen (5), and the pivoting arm (3) is pivotable vertically through about 180 degrees between the first position and the second position.

6. Devcie according to at least one of the preceding claims, **characterized in that** the pivoting arm (3) comprises a pivoting-arm pillar (9) and a pivotable pivoting table (10) which carries the second and the fourth mould half (4, 7).

7. Device according to at least one of the preceding claims, **characterized in that** the pivoting arm (3) can be pivoted between the first position and the second position by means of a geared motor (11).

8. Device according to at least one of the preceding claims, **characterized in that** the pivoting movement of the pivoting arm (3) is assisted by a device which utilizes the weight of the pivoting arm (3) for lifting the pivoting arm (3), in particular a spring device (12).

9. Device according to at least one of the preceding claims, **characterized in that** the press (13, 14) of the first and/or of the second press platen (1, 5) is operated mechanically, hydraulically and/or hydropneumatically, in particular is operated in two stages.

10. Method for manufacturing plastic containers, heated plastic plates (8) being introduced in a first upwardly open mould half (2) and a second upwardly open mould half (4) and the plastic plates (8) being thermoformed into plastic half-shells in the first and second mould half (2, 4), the first mould half (2) being arranged on a first press platen (1) and the second mould half (4) being arranged on a pivoting arm (3), the pivoting arm (3) being brought into a first position above the first press platen (1), in which position the first and the second mould half (2, 4) are open towards one another, and thereafter, by the first mould half (2) being pressed onto the second mould half (4), the plastic half-shells accommodated therein being welded to one another at their overlapping margins, **characterized in that**, thereafter, heated plastic plates (8) are introduced in a third upwardly open mould half (6) and a fourth upwardly open mould half (7) and the plastic plates (8) are thermoformed into third and fourth plastic half-shells in the third and the fourth mould half (6, 7), the third mould half (6) being arranged on a second press platen (5) and the fourth mould half (7) being arranged on the pivoting arm (3), the pivoting arm (3) being brought into a second position above the second press platen (5), in which position the third and the fourth mould half (6, 7) are open towards one another, and thereafter, by the third mould half (6) being pressed onto the fourth mould half (7), the plastic half-shells accommodated therein being welded to one another at their overlapping margins.

11. Method according to Claim 10, **characterized in that** the plastic plates (8) in the first mould half (2) and/or the second mould half (4) and/or the third mould half (6) and/or the fourth mould half (7) are drawn for thermoforming into the respective mould halves (2, 4, 6, 7) by a vacuum.

12. Method according to Claim 10 or 11, **characterized in that** the pivoting arm (3) is pivoted vertically through about 180 degrees between the first position and the second position.

13. Method according to at least one of Claims 10 to 12, **characterized in that** plastic plates (8) are introduced into the first and the second mould half (2, 4) while plastic half-shells welded to one another cool in the third and the fourth mould half (6, 7), and/or **in that** plastic plates (8) are introduced into the third and the fourth mould half (6, 7) while plastic half-shells welded to one another cool in the first and the second mould half (2, 4).

14. Method according to at least one of Claims 10 to 13, **characterized in that** insert parts are introduced into the first and/or the second and/or the third and/or the fourth mould half (2, 4, 6, 7) after the thermoforming of the plastic half-shells and before the welding of the plastic half-shells in pairs.

15. Method according to at least one of Claims 10 to 14, **characterized in that** the pivoting arm (3) or a pivotable pivoting table (10) of the pivoting arm (3), which pivoting table carries the second and the fourth mould half (4, 7), is locked in its position before pressing.

## Revendications

1. Dispositif de fabrication de récipients en matière plastique, dans lequel le dispositif comprend une première table de presse (1) avec une première moitié de moule (2) et un bras pivotant (3) avec une deuxième moitié de moule (4), dans lequel des demi-coquilles en matière plastique chauffées et thermoformées peuvent être placées dans la première et dans la deuxième moitié de moule (2, 4), dans lequel, dans une première position du bras pivotant (3) au-dessus de la première table de presse (1), la première et la deuxième moitié de moule (2, 4) sont ouvertes l'une vers l'autre, de telle manière que, en pressant la première moitié de moule (2) sur la deuxième moitié de moule (4), les demi-coquilles de matière plastique contenues dans celles-ci puissent être soudées l'une à l'autre par leur bords qui se chevauchent, **caractérisé en ce que** le dispositif comprend une deuxième table de presse (5) avec une troisième moitié de moule (6) et le bras pivotant (3) présente une quatrième moitié de moule (7), dans lequel des demi-coquilles de matière plastique chauffées et thermoformées peuvent être placées dans la troisième et dans la quatrième moitié de moule (6, 7), dans lequel, dans une deuxième position du bras pivotant (3) au-dessus de la deuxième table de presse (5), la troisième et la quatrième moitié de moule (6, 7) sont ouvertes l'une vers l'autre, de telle manière que, en pressant la troisième moitié de moule (6) sur la quatrième moitié de moule (7), les demi-coquilles de matière plastique contenues dans celles-ci puissent être soudées l'une à l'autre par leurs bords qui se chevauchent.

2. Dispositif selon la revendication 1, **caractérisé en ce que** la première moitié de moule (2) et/ou la deuxième moitié de moule (4) et/ou la troisième moitié de moule (6) et/ou la quatrième moitié de moule (7) sont réalisées en tant que station de thermoformage, de telle manière qu'une plaque de matière plastique chauffée (8) puisse être placée dans la moitié de moule respective (2, 4, 6, 7) et que la demi-coquille de matière plastique soit thermoformée à partir de la plaque de matière plastique (8) dans la moitié de moule respective (2, 4, 6, 7).

3. Dispositif selon la revendication 2, **caractérisé en ce que** les stations de thermoformage sont réalisées en tant que stations de thermoformage sous vide, de telle manière que les plaques de matière plastique (8) soient attirées dans les moitiés de moule respectives (2, 4, 6, 7) par une dépression.

4. Dispositif selon au moins une des revendications précédentes, **caractérisé en ce que** la deuxième moitié de moule (4) et la quatrième moitié de moule (7) sont disposées sur des côtés opposés du bras pivotant (3), de telle manière que les ouvertures des moitiés de moule (4, 7) soient respectivement orientées à l'opposé du bras pivotant (3).

5. Dispositif selon au moins une des revendications précédentes, **caractérisé en ce que** le bras pivotant (3) est monté sensiblement au milieu entre la première table de presse (1) et la deuxième table de presse (5), et le bras pivotant (3) peut pivoter verticalement d'environ 180 degrés entre la première position et la deuxième position.

6. Dispositif selon au moins une des revendications précédentes, **caractérisé en ce que** le bras pivotant (3) comprend un pied de bras pivotant (9) et une table de pivotement pivotante (10), qui porte la deuxième et la quatrième moitié de moule (4, 7).

7. Dispositif selon au moins une des revendications précédentes, **caractérisé en ce que** le bras pivotant (3) peut pivoter entre la première position et la deuxième position au moyen d'un moto-réducteur (11).

8. Dispositif selon au moins une des revendications précédentes, **caractérisé en ce que** le mouvement de pivotement du bras pivotant (3) est assisté par un dispositif, qui utilise le poids du bras pivotant (3) pour le levage du bras pivotant (3), en particulier un dispositif à ressort (12).

9. Dispositif selon au moins une des revendications précédentes, **caractérisé en ce que** la presse (13, 14) de la première et/ou de la deuxième table de presse (1, 5) est commandée par voie mécanique, hydraulique et/ou hydropneumatique, en particulier en deux étapes.

10. Procédé de fabrication de récipients en matière plastique, dans lequel on place des plaques de matière plastique chauffées (8) dans une première moitié de moule ouverte vers le haut (2) et dans une deuxième moitié de moule ouverte vers le haut (4) et on opère le thermoformage des plaques de matière plastique (8) en demi-coquilles de matière plastique dans la première et dans la deuxième moitié de moule (2, 4), dans lequel la première moitié de moule (2) est disposée sur une première table de presse (1) et la deuxième moitié de moule (4) est disposée sur un bras pivotant (3), dans lequel on amène le bras pivotant (3) dans une première position au-dessus de la première table de presse (1), dans laquelle la première et la deuxième moitié de moule (2, 4) sont ouvertes l'une vers l'autre, dans lequel on soude ensuite l'une à l'autre, en pressant la première moitié de moule (2) sur la deuxième moitié de moule (4), les demi-coquilles de matière plastique contenues dans celles-ci par leurs bords qui se chevauchent, **caractérisé en ce que** l'on place ensuite des plaques de matière plastique chauffées (8) dans une troisième moitié de moule ouverte vers le haut (6) et dans une quatrième moitié de moule ouverte par le haut (7) et on opère dans la troisième et dans la quatrième moitié de moule (6, 7) le thermoformage des plaques de matière plastique (8) en des troisièmes et quatrième demi-coquilles de matière plastique, dans lequel la troisième moitié de moule (6) est disposée sur une deuxième table de presse (5) et la quatrième moitié de moule (7) est disposée sur le bras pivotant (3), dans lequel on amène le bras pivotant (3) dans une deuxième position au-dessus de la deuxième table de presse (5), dans laquelle la troisième et la quatrième moitié de moule (6, 7) sont ouvertes l'une vers l'autre, dans lequel on soude ensuite l'une à l'autre, en pressant la troisième moitié de moule (6) sur la quatrième moitié de moule (7), les demi-coquilles de matière plastique contenues dans celles-ci par leurs bords qui se chevauchent.

11. Procédé selon la revendication 10, **caractérisé en ce que** les plaques de matière plastique (8) placées dans la première moitié de moule (2) et/ou dans la deuxième moitié de moule (4) et/ou dans la troisième moitié de moule (6) et/ou dans la quatrième moitié de moule (7) sont attirées dans les moitiés de moule respectives (2, 4, 6, 7) par une dépression en vue du thermoformage.

12. Procédé selon la revendication 10 ou 11, **caractérisé en ce que** l'on fait pivoter le bras pivotant (3) verticalement d'environ 180 degrés entre la première position et la deuxième position.

13. Procédé selon au moins une des revendications 10 à 12, **caractérisé en ce que** l'on place des plaques de matière plastique (8) dans la première et dans la deuxième moitié de moule (2, 4) pendant que des demi-coquilles de matière plastique soudées l'une à l'autre refroidissent dans la troisième et dans la quatrième moitié de moule (6, 7) et/ou **en ce que** l'on place des plaques de matière plastique (8) dans la troisième et dans la quatrième moitié de moule (6, 7) pendant que des demi-coquilles de matière plastique soudées l'une à l'autre refroidissent dans la première et dans la deuxième moitié de moule (2, 4).

14. Procédé selon au moins une des revendications 10 à 13, **caractérisé en ce que** l'on place dans la première et/ou dans la deuxième et/ou dans la troisième et/ou dans la quatrième moitié de moule (2, 4, 6, 7) des pièces d'insertion après le thermoformage des demi-coquilles de matière plastique et avant le soudage par paires des demi-coquilles de matière plastique.

15. Procédé selon au moins une des revendications 10 à 14, **caractérisé en ce que** l'on verrouille le bras pivotant (3) ou une table de presse pivotante (10) du bras pivotant (3), qui porte la deuxième et la quatrième moitié de moule (4, 7), dans sa position avant le pressage.
